# EUROPÄISCHE PATENTSCHRIFT

(11) **EP 3 507 249 B1**
(45) Veröffentlichungstag und Bekanntmachung des Hinweises auf die Patenterteilung: **17.07.2024**
(21) Anmeldenummer: 17758518.9
(22) Anmeldetag: 25.08.2017
(51) Int. Cl.: C02F 1/48, B01D 35/04, B05B 1/18, C02F 1/461

(54) **FLÜSSIGKEITSAUFBEREITUNGSVORRICHTUNG, FLÜSSIGKEITSAUSLASSVORRICHTUNG**
LIQUID TREATMENT DEVICE, LIQUID OUTLET DEVICE
DISPOSITIF DE TRAITEMENT DE LIQUIDE, DISPOSITIF D'ÉVACUATION DE LIQUIDE

(30) Priorität: 31.08.2016 DE 102016216397
(43) Veröffentlichungstag der Anmeldung: 10.07.2019
(73) Patentinhaber: Robert Bosch GmbH, 70442 Stuttgart (DE)
(72) Erfinder: DUKART, Anton, 70839 Gerlingen (DE); OHLHAFER, Olaf, 74391 Erligheim (DE)
(86) Internationale Anmeldenummer: PCT/EP2017/071434
(87) Internationale Veröffentlichungsnummer: WO 2018/041736

(56) Entgegenhaltungen:
- CN-U- 204 752 269
- DE-A1- 102007 028 580
- DE-A1- 102010 043 845
- DE-T2- 60 006 847
- DE-U1- 20 118 359
- KR-A- 20110 047 679
- US-A1- 2013 313 115

## Beschreibung

Die Erfindung betrifft eine Flüssigkeitsaufbereitungsvorrichtung nach Anspruch 1 und eine Flüssigkeitsauslassvorrichtung nach Anspruch 6.

### Stand der Technik

Aus der DE 102007028580 A1 ist eine Vorrichtung zum Reinigen und Entkeimen von Flüssigkeiten bekannt, bei der eine Flüssigkeit zwischen einander gegenüberstehenden Elektroden mit gepulsten Korona-Entladungen beaufschlagt wird. In Wasser als Flüssigkeit werden durch diese Koronaentladungen eine Vielzahl von oxidierenden Radikalen - wie beispielsweise OH', O', HO₂' - generiert, die den Abbau schädlicher chemischer oder biologischer Stoffe und insbesondere eine Entkeimung bewirken. Weiterer Stand der Technik ist aus der DE 10 2010 043845 A1, der US 2013/313115 A1, der DE 201 18 359 U1 und der DE 600 06 847 T2 bekannt.

### Offenbarung der Erfindung

Die erfindungsgemäße Flüssigkeitsaufbereitungsvorrichtung dient zum Aufbereiten, insbesondere Entkeimen, einer an einer Flüssigkeitsauslassvorrichtung aus einer Flüssigkeitsversorgungsleitung in eine Nutzumgebung fließenden Flüssigkeit, insbesondere von Wasser. Sie umfasst einen Einlass zum Zuführen von aufzubereitender Flüssigkeit, einen Auslass zum Abführen von aufbereiteter Flüssigkeit, sowie eine den Einlass mit dem Auslass flüssigkeitsleitend verbindende Aufbereitungsstrecke. Dabei ist in und/oder an der Aufbereitungsstrecke mindestens ein Elektrodenpaar angeordnet, das dazu vorgesehen ist, mindestens ein elektrisches Feld zu erzeugen, von dem die Flüssigkeit in der Aufbereitungsstrecke durchsetzt ist und mittels irreversibler Elektroporation aufbereitet, insbesondere entkeimt wird.

Eine Flüssigkeit bedeutet hier eine flüssige Substanz, insbesondere Wasser, Trinkwasser sowie weitere flüssige Lebensmittel. Aufbereiten einer Flüssigkeit bedeutet hier das zielgerichtete Verändern einer Flüssigkeitsqualität durch Entfernen und/oder Inaktivieren bestimmter Stoffe wie zum Beispiel Krankheitserreger. Entkeimen einer Flüssigkeit bedeutet hier das Entfernen und/oder Inaktivieren und/oder Abtöten von Mikroorganismen wie zum Beispiel Bakterien. Eine Flüssigkeitsaufbereitungsvorrichtung bedeutet eine Vorrichtung, die geeignet ist, eine Flüssigkeit aufzubereiten und/oder zu entkeimen. Eine Flüssigkeitsversorgungsleitung, beispielsweise eine Wasserversorgungsleitung, ist eine mit einem Flüssigkeitsversorger, beispielsweise einem kommunalen Wasserwerk, verbundene Leitung, über die ein Nutzer mit Flüssigkeit, beispielsweise mit Trinkwasser, versorgt werden kann. Eine Flüssigkeitsauslassvorrichtung ist eine Vorrichtung, an der die Flüssigkeit aus der Flüssigkeitsversorgungsleitung entnommen und ihrer Nutzung zugeführt werden kann, dabei handelt es sich beispielsweise um eine Zapfvorrichtung, eine Dosiervorrichtung, einen Wasserhahn, eine Waschtischarmatur, einen Duschkopf oder eine Einspeisevorrichtung zum Zapfen und/oder Dosieren einer Flüssigkeit und/oder zum Mischen mindestens zweier Flüssigkeiten. Unter Nutzumgebung wird hier der Ort verstanden, an dem die Flüssigkeit genutzt wird, beispielsweise eine Küche, ein Badezimmer, eine Waschküche, ein Getränkeausschank, ein Spülbecken, ein Waschbecken, eine Dusche, eine Waschmaschine, eine Spülmaschine. Ein Einlass ist ein Eintritt und/oder ein Anschluss, an dem die Flüssigkeit einer Verwendung und/oder einer Behandlung, im vorliegenden Fall der Aufbereitung, zugeführt wird. Ebenso ist ein Auslass ein Austritt und/oder ein Anschluss, an dem die Flüssigkeit nach einer Verwendung und/oder einer Behandlung, im vorliegenden Fall nach der Aufbereitung, abgeführt wird. Eine Aufbereitungsstrecke ist eine flüssigkeitsleitende Strömungsstrecke, in der die Aufbereitung der Flüssigkeit erfolgt, beispielsweise ist dies ein als Reaktionsraum ausgebildetes Leitungsstück. Eine Elektrode bedeutet hier ein Bauteil, das ausgebildet ist, eine elektrische Ladungen aufzunehmen und zu leiten. Ein Elektrodenpaar umfasst eine Elektrode und eine Gegenelektrode, die in fester räumlicher Zuordnung zueinander stehen und bei Beladung mit elektrischen Ladungen, beispielsweise gleichen Betrags aber verschiedenen Vorzeichens, ein elektrisches Feld zwischen sich ausbilden, zum Beispiel ähnlich einem Kondensator. Alternativ kann auch nur eine Elektrode elektrisch geladen sein, während die andere Elektrode mit einem Nullleiter verbunden ist. Ein elektrisches Feld ist ein räumliches physikalisches Feld, das von elektrischen Ladungen hervorgerufen wird und auf elektrische Ladungen wirkt. Von einem elektrischen Feld durchsetzt sein bedeutet in Bezug auf die durch die Aufbereitungsstrecke strömende Flüssigkeit durchdrungen zu sein, dem Feld ausgesetzt zu sein, das Feld wirkt auf die Flüssigkeit und/oder auf Bestandteile der Flüssigkeit und/oder auf Bestandteile in der Flüssigkeit und verändert infolgedessen die Flüssigkeitsqualität. Elektroporation bedeutet hier eine Methode, Membranen von Zellen von Mikroorganismen permeabel zu machen und basiert darauf, die Zellen einem elektrischen Feld auszusetzen. Diese Permeabilisierung kann reversibel oder irreversibel sein. Irreversible Elektroporation führt zu irreversibler Permeabilisierung der Zellmembran und damit zum Absterben der Zellen und somit zum Inaktivieren und/oder Abtöten der Mikroorganismen.

Die Flüssigkeitsaufbereitungsvorrichtung umfasst ferner eine Energiebereitstellungseinheit, die dazu vorgesehen ist, eine elektrische Energie zum Erzeugen einer an die Elektroden anlegbaren Spannung bereitzustellen. Die Energiebereitstellungseinheit umfasst eine in der Aufbereitungsstrecke angeordnete, von der aufzubereitenden Flüssigkeit oder der aufbereiteten Flüssigkeit durchströmbare Turbine mit Generator. Eine Durchströmung der Turbine mit Flüssigkeit bringt diese zum Rotieren, der mit der Turbine gekoppelte Generator erzeugt dann eine elektrische Energie. Damit ist eine sichere Energiebereitstellung gewährleistet.

Mit der Erfindung ist eine Flüssigkeitsaufbereitungsvorrichtung geschaffen, die eine Flüssigkeit unmittelbar am Ort und im Zeitpunkt der Entnahme aus einer Flüssigkeitsversorgungsleitung aufbereitet, insbesondere entkeimt, also unmittelbar am Ort und im Zeitpunkt der Nutzung dem Nutzer aufbereitet zur Verfügung stellt. Damit ist der Vorteil verbunden, dass beispielsweise eine nicht sicher auszuschließende Neuverkeimung der Flüssigkeit innerhalb eines Flüssigkeitsspeichers oder innerhalb der Flüssigkeitsversorgungsleitung während etwaiger Zapfpausen die Flüssigkeitsqualität der gezapften Flüssigkeit nicht beeinflusst. Beispielsweise können sich Legionellen in Trinkwasser im Temperaturbereich zwischen etwa 25 °C und 50 °C vermehren. Legionellen sind Verursacher der Legionärskrankheit, wenn sie über die Lunge in den Körper gelangen (beispielsweise durch Einatmen des versprühten Wassers als Bioaerosol). Escherichia Coli können Lebensmittel besiedeln und/oder in der Flüssigkeit enthalten sein und zählen zu den häufigsten Verursachern von menschlichen Infektionskrankheiten. Die hier beschriebene Flüssigkeitsaufbereitungsvorrichtung tötet unter anderem die genannten Bakterien in der aufzubereitenden Flüssigkeit ab und vermeidet eine Erkrankung des Nutzers beziehungsweise des Konsumenten der Flüssigkeit. Die Abtötung der Bakterien erfolgt durch irreversible Elektroporation, wobei vorteilhafterweise keine anderen die Flüssigkeitsqualität (zum Beispiel das Geschmacksempfinden) störenden Bestandteile wie beispielsweise Ozon oder Chlor entstehen. Es müssen der aufzubereitenden Flüssigkeit auch keine weiteren Inhaltsstoffe zugesetzt werden beziehungsweise in ihr vorhanden sein wie beispielsweise Natriumchlorid. Es kommt beabsichtigterweise nicht zu einem Spannungsdurchschlag zwischen den Elektroden in der Flüssigkeit. Damit handelt es sich um eine sichere Aufbereitungsvorrichtung, deren Verwendung keine störenden anderweitigen Begleitumstände mit sich bringt. - Ein Spannungsdurchschlag bedeutet hier, dass sich eine elektrische Spannung in Form eines Funkens oder eines Lichtbogens ausgleicht und abbaut. Er entsteht, wenn eine zwischen zwei Elektroden anliegende Spannung größer als eine gegebene Durchschlagsfestigkeit ist, wobei die Durchschlagsfestigkeit von dem Medium zwischen den Elektroden und einer Dauer, insbesondere einer Pulsdauer, eines auf das Medium zwischen den Elektroden einwirkenden elektrischen Feldes abhängt.

Eine Ausführungsform nicht gemäß der vorliegenden Erfindung der Flüssigkeitsaufbereitungsvorrichtung ist dadurch gekennzeichnet, dass das Elektrodenpaar zwei Elektroden umfasst, wobei eine erste Elektrode im Wesentlichen, insbesondere vollständig umfänglich an einer Wand der Flüssigkeitsaufbereitungsvorrichtung angeordnet ist, und wobei eine zweite Elektrode innerhalb der Aufbereitungsstrecke angeordnet ist.

Die Aufbereitungsstrecke umfasst beispielsweise ein durchströmbares rohrförmiges Element oder ein durchströmbares Behältnis und bildet so einen Strömungsraum mit einem einen freien Strömungsquerschnitt darstellenden Inneren und einer eine Strömungsbegrenzung darstellenden Wand, die den freien Strömungsquerschnitt ähnlich einer Rohrwandung umfänglich nach außen fluiddicht abschließt. Die erste Elektrode ist flach an der Wand der Flüssigkeitsaufbereitungsvorrichtung angeordnet, beispielsweise auf der dem Inneren zugewandten Seite der Wand. Optional ist die erste Elektrode auf der dem Inneren abgewandten Seite der Wand angeordnet. Weiter optional bildet die erste Elektrode selbst zumindest abschnittsweise die Wand. Dass die erste Elektrode im Wesentlichen, insbesondere vollständig umfänglich an der Wand der Flüssigkeitsaufbereitungsvorrichtung angeordnet ist bedeutet, dass die Elektrode vom Inneren des Strömungsraums aus radial zu einer Hauptströmungsrichtung der Flüssigkeitsströmung betrachtet auf einem Betrachtungswinkel von mindestens 180 Grad, vorzugsweise von mindestens 270 Grad, besonders vorzugsweise von mindestens 330 Grad, oder vollständig auf 360 Grad Umfang an der Wand der Flüssigkeitsaufbereitungsvorrichtung, insbesondere flach entlang der Wand angeordnet ist. Dabei weist die erste Elektrode auch eine Längserstreckung in Hauptströmungsrichtung auf. Die zweite Elektrode ist im Innern des freien Strömungsquerschnitts angeordnet, beispielsweise handelt es sich um eine prismaförmige oder stabförmige, sich parallel zu einer Längsachse der Hauptströmungsrichtung erstreckende Elektrode. Insbesondere kann die zweite Elektrode zylinderabschnittförmig sein und mittig im Inneren des Strömungsraums angeordnet sein. Erste Elektrode und zweite Elektrode des Elektrodenpaars sind vorteilhafterweise in einem selben Längsabschnitt der Aufbereitungsstrecke angeordnet. Eine solche Anordnung kann vorzugsweise koaxial sein. Zwischen den Elektroden bildet sich ein spaltförmiger freier Querschnitt, durch den die aufzubereitende Flüssigkeit hindurchströmen kann.

Die Flüssigkeitsaufbereitungsvorrichtung der Erfindung ist dadurch gekennzeichnet, dass das Elektrodenpaar zwei Elektroden umfasst, wobei eine Elektrode mindestens zwei elektrisch parallel geschaltete Elektrodenabschnitte aufweist, und wobei die andere Elektrode mindestens einen Elektrodenabschnitt oder mindestens zwei elektrisch parallel geschaltete Elektrodenabschnitte aufweist. Dabei sind die Elektrodenabschnitte vollzylindrisch und/oder hohlzylindrisch mit einer Zylinderachse und mit voneinander abweichenden Durchmessern ausgebildet sind und erstrecken sich achsparallel zu einer Hauptströmungsrichtung der Flüssigkeit erstrecken. Die Elektrodenabschnitte sind im Wesentlichen, insbesondere vollständig koaxial zueinander und radial beabstandet zueinander angeordnet, wobei die Elektrodenabschnitte einer Elektrode Zwischenräume bilden, in die die Elektrodenabschnitte der anderen Elektrode zumindest teilweise eingreifen. Dabei weisen benachbarte Elektrodenabschnitte voneinander abweichende Polaritäten auf.

Allgemein gilt für die Erfindung: Elektrodenabschnitte sind Teilbereiche einer Elektrode, die zusammen eine einteilige oder vorzugsweise eine mehrteilige geometrische Struktur der Elektrode ausbilden. Die Elektrodenabschnitte der ersten Elektrode sind elektrisch leitend miteinander verbunden. Ebenso sind die Elektrodenabschnitte der zweiten Elektrode elektrisch leitend miteinander verbunden. Somit können die Elektrodenabschnitte der ersten Elektrode eine andere Polarität als die Elektrodenabschnitte der zweiten Elektrode annehmen. Polarität bedeutet eine elektrische Verbindung zu einem elektrischen Gleichspannungspol wie zum Beispiel ein Pluspol, eine Anode, ein Minuspol, eine Kathode, oder eine elektrische Verbindung zu einer Wechselspannung, oder eine Verbindung zu Erdpotential. Mit der Polarität von Elektrode und Gegenelektrode ist eine Feldrichtung (auch Feldlinienrichtung genannt, Richtung eines Vektorfeldes der elektrischen Feldstärke) des sich ausbildenden Feldes verbunden: diese ist definiert als vom Pluspol zum Minuspol weisend. Neben den elektrisch leitenden Verbindungen können die Elektrodenabschnitte der ersten und/oder der zweiten Elektrode auch mechanisch, beispielsweise elektrisch isolierend, untereinander verbunden sein - beispielsweise durch ein stegförmiges Verbindungselement - und so eine einfach handhabbare erste und/oder zweite Elektrode oder auch ein einfach handhabbares Elektrodenpaar ausbilden.

Die einzelnen Elektrodenabschnitte sind jeweils als Vollzylinder oder als Hohlzylinder ausgebildet, die jeweils unterschiedliche Durchmesser aufweisen. Die Längen der Elektrodenabschnitte können im Wesentlichen oder vollständig gleich sein, das bedeutet, dass die Längen um maximal 30 %, vorzugsweise um maximal 15 %, besonders bevorzugt um maximal 5 % voneinander abweichen oder identisch sind. Die hohlzylindrischen Elektrodenabschnitte der ersten Elektrode und die voll- bzw. hohlzylindrischen Elektrodenabschnitte der zweiten Elektrode des Elektrodenpaars sind vorteilhafterweise in einem selben Längsabschnitt der Aufbereitungsstrecke angeordnet, das bedeutet, dass die quer zur Hauptströmungsrichtung angeordneten Stirnseiten der Elektrodenabschnitte in einer gemeinsamen Ebene liegen oder nur geringfügig axial gegeneinander verschoben sind, beispielsweise maximal um 30 %, vorzugsweise um maximal 15 %, besonders bevorzugt um maximal 5 % in Bezug auf die Länge des längsten Elektrodenabschnitts in Hauptströmungsrichtung voneinander abweichen. Dass die Zylinder im Wesentlichen, insbesondere vollständig koaxial zueinander angeordnet sind bedeutet, dass sie eine gemeinsame Zylinderachse aufweisen oder dass ihre jeweiligen Zylinderachsen nur geringfügig radial und/oder winklig voneinander abweichen, zum Beispiel radial maximal um 10 %, bevorzugt maximal um 5 % des Durchmessers des Strömungsquerschnitts der Aufbereitungsstrecke gegeneinander verschoben sind, oder zum Beispiel winklig maximal um 10 Grad, vorzugsweise maximal um 5 Grad gegeneinander gekippt sind. Die Stirnseiten (Grundfläche) der Vollzylinder bzw. Hohlzylinder können kreisförmig, kreisringförmig, ellipsenringförmig, oder regelmäßig oder unregelmäßig vieleckringförmig sein. Dementsprechend sind die Hohlzylinder hohle Kreiszylinder, hohle Ellipsenzylinder mit elliptischer Grundfläche (Stirnfläche), oder allgemein hohle Prismen mit regelmäßig oder unregelmäßig vieleckiger Grundfläche (Stirnfläche). Die Zylinder sind radial zueinander beabstandet angeordnet, das bedeutet, dass zwischen den Zylindern Zwischenräume oder Spalte vorhanden sind, die wiederum hohlzylindrische Form haben. Durch diese Spalte kann die aufzubereitende Flüssigkeit hindurchströmen. Die ineinander und radial beabstandet zueinander angeordneten Zylinder und Hohlzylinder sind als Elektrodenabschnitte abwechselnd der ersten Elektrode oder der zweiten Elektrode zugeordnet. Beispielsweise sind (radial von innen nach außen zählend) der innerste Elektrodenabschnitt ein Vollzylinder, der dritte, der fünfte (ggf. weitere) Hohlzylinder Elektrodenabschnitte der ersten Elektrode. In diesem Beispiel sind der zweite, vierte, sechste (ggf. weitere) Hohlzyinder Elektrodenabschnitte der zweiten Elektrode. In anderen Worten greifen die Elektrodenabschnitte der ersten Elektrode in die Zwischenräume, die sich zwischen den Elektrodenabschnitten der zweiten Elektrode bilden, ein. Der Ausdruck "zumindest teilweise eingreifen" beschreibt den oben erläuterten Aspekt, dass die Elektrodenabschnitte in einem selben Längsabschnitt der Aufbereitungsstrecke angeordnet sind oder nur geringfügig axial gegeneinander verschoben sind. Der innerste Elektrodenabschnitt kann hohlzylindrisch oder vollzylindrisch ausgebildet sein.

Eine vorteilhafte Ausführungsform der Flüssigkeitsaufbereitungsvorrichtung ist dadurch gekennzeichnet, dass das Elektrodenpaar zwei Elektroden umfasst, wobei eine Elektrode mindestens zwei elektrisch parallel geschaltete Elektrodenabschnitte aufweist, und wobei die andere Elektrode mindestens einen Elektrodenabschnitt oder mindestens zwei elektrisch parallel geschaltete Elektrodenabschnitte aufweist. Dabei sind die Elektrodenabschnitte schalenförmig, insbesondere plattenförmig ausgebildet und erstrecken sich parallel zu einer Hauptströmungsrichtung der Flüssigkeit, wobei die Elektrodenabschnitte stapelartig und beabstandet zueinander angeordnet sind. Die Elektrodenabschnitte einer Elektrode bilden Zwischenräume, in die die Elektrodenabschnitte der anderen Elektrode zumindest teilweise eingreifen. Benachbarte Elektrodenabschnitte weisen voneinander abweichende Polaritäten auf.

In der hier beschriebenen Ausführungsform sind die einzelnen Elektrodenabschnitte jeweils schalenförmig, insbesondere plattenförmig ausgebildet, das bedeutet eine flächige zweidimensionale Struktur mit einer geringen Dicke und um ein Vielfaches größeren Abmessungen von Breite und Länge. Die Längen der einzelnen schalenförmigen oder plattenförmigen Elektrodenabschnitte können im Wesentlichen oder vollständig gleich sein, das bedeutet, dass die Längen um maximal 30 %, vorzugsweise um maximal 15 %, besonders bevorzugt um maximal 5 % voneinander abweichen oder identisch sind. Die Breiten der Elektrodenabschnitte orientieren sich an den zur Verfügung stehenden Innenabmessungen des freien Strömungsquerschnitts des Strömungsraums der Aufbereitungsstrecke, die Breiten füllen den freien Strömungsquerschnitt im Wesentlichen, bevorzugt vollständig aus. Die Dicken der Elektrodenabschnitte orientieren sich an den an die Elektrodenabschnitte gestellten Stabilitätsanforderungen und sind um ein Vielfaches geringer als die Breiten und Längen. Die schalenförmigen oder plattenförmigen Elektrodenabschnitte der ersten Elektrode und die schalenförmigen oder plattenförmigen Elektrodenabschnitte der zweiten Elektrode des Elektrodenpaars sind vorteilhafterweise in einem selben Längsabschnitt der Aufbereitungsstrecke angeordnet, das bedeutet, dass die quer zur Hauptströmungsrichtung angeordneten Stirnseiten der Elektrodenabschnitte in einer gemeinsamen Ebene liegen oder nur geringfügig axial gegeneinander verschoben sind, beispielsweise maximal um 30 %, vorzugsweise um maximal 15 %, besonders bevorzugt um maximal 5 % in Bezug auf die Länge des längsten Elektrodenabschnitts in Hauptströmungsrichtung voneinander abweichen. Dass die schalenförmigen oder plattenförmigen Elektrodenabschnitte im Wesentlichen, insbesondere vollständig parallel zu einer Hauptströmungsrichtung der Flüssigkeit (und damit auch parallel zueinander) angeordnet sind bedeutet, dass die Elektrodenabschnitte Längsrichtungen aufweisen, die nur geringfügig winklig von der Hauptströmungsrichtung abweichen, zum Beispiel winklig maximal um 10 Grad, vorzugsweise maximal um 5 Grad, besonders bevorzugt gar nicht gegeneinander gekippt sind. Die Stirnseiten (beziehungsweise die Querschnitte) der Elektrodenabschnitte können rechteckig oder bogenförmig oder wellenförmig mit einer geringen Dicke sein. Dementsprechend sind die Elektrodenabschnitte ebene Platten oder einfach gekrümmte oder wellig gekrümmte Schalen. Die Krümmungsachse oder die Krümmungsachsen der Schalen liegen parallel zur Längsrichtung der Schalen und damit im Wesentlichen, insbesondere vollständig parallel zu einer Hauptströmungsrichtung. Der allgemeine Begriff der gekrümmten Schale schließt den Sonderfall der ebenen, nicht gekrümmten Platte mit ein. Die Elektrodenabschnitte sind stapelartig und beabstandet zueinander angeordnet, das bedeutet, dass die Elektrodenabschnitte mit ihren von Breite und Länge definierten Oberflächen einander zugewandt übereinander gestapelt sind. Zwischen den Elektrodenabschnitten sind Zwischenräume oder Spalte vorhanden, deren Formen durch die Form der benachbarten Elektrodenabschnitte definiert sind. Durch diese Spalte kann die aufzubereitende Flüssigkeit hindurchströmen. Die beabstandet zueinander angeordneten Elektrodenabschnitte sind abwechselnd der ersten Elektrode oder der zweiten Elektrode zugeordnet. Beispielsweise sind ein erster, dritter, fünfter (ggf. weitere) Elektrodenabschnitt der ersten Elektrode, und ein zweiter, vierter, sechster (ggf. weitere) Elektrodenabschnitt der zweiten Elektrode zugeordnet. In anderen Worten greifen die Elektrodenabschnitte der ersten Elektrode in die Zwischenräume, die sich zwischen den Elektrodenabschnitten der zweiten Elektrode bilden, ein.

Eine weitere vorteilhafte Ausführungsform der Flüssigkeitsaufbereitungsvorrichtung ist dadurch gekennzeichnet, dass die Elektroden und/oder Elektrodenabschnitte zumindest teilweise isolierend beschichtet sind. Dadurch können beispielsweise Ablagerungen aus der Flüssigkeit auf den Elektroden bzw. Elektrodenabschnitten und/oder Beschädigungen vermieden werden. Damit sich dennoch das elektrische Feld zwischen den Elektroden weitgehend ungehindert ausbilden kann, empfiehlt sich eine hohe Permittivität (dielektrische Leitfähigkeit) der Beschichtung.

Eine weitere vorteilhafte Ausführungsform der Flüssigkeitsaufbereitungsvorrichtung ist dadurch gekennzeichnet, dass der der Flüssigkeit zur Verfügung stehende freie Abstand zwischen den Elektroden und/oder zwischen den Elektrodenabschnitten im Bereich 0,1 bis 20 Millimeter, bevorzugt im Bereich 1 bis 10 Millimeter liegt. Damit ist für einen ausreichend geringen Strömungswiderstand der Flüssigkeit bei guter Ausbildungsmöglichkeit für das elektrische Feld gesorgt.

Eine weitere vorteilhafte Ausführungsform der Flüssigkeitsaufbereitungsvorrichtung ist gekennzeichnet durch eine Energiebereitstellungseinheit, die dazu vorgesehen ist, eine elektrische Energie zum Erzeugen einer an die Elektroden anlegbaren Spannung bereitzustellen. Die Energiebereitstellungseinheit kann in der Aufbereitungsstrecke integriert sein oder außerhalb angeordnet sein. Die Energiebereitstellungseinheit kann die Energie beispielsweise selbst erzeugen (umwandeln) und/oder von einem Energieversorger durchleiten.

Eine weitere vorteilhafte Ausführungsform der Flüssigkeitsaufbereitungsvorrichtung ist gekennzeichnet durch einen Spannungspulsgenerator, der dazu vorgesehen ist, Spannungspulse zum Anlegen an die Elektroden zu erzeugen. Damit ist die Möglichkeit zum Erzeugen eines gepulsten elektrischen Feldes geschaffen.

Die erfindungsgemäße Flüssigkeitsauslassvorrichtung kann beispielsweise ein Wasserhahn, eine Waschtischarmatur, ein Duschkopf oder eine Einspeisevorrichtung zum Zapfen und/oder Dosieren einer Flüssigkeit aus einer Flüssigkeitsversorgungsleitung in eine Nutzumgebung für Anwendungen in Küche, Badezimmer und/oder Waschküche sein, mit einer wie vorstehend beschriebenen erfindungsgemäßen Flüssigkeitsaufbereitungsvorrichtung, wobei die Flüssigkeitsaufbereitungsvorrichtung in oder an der Flüssigkeitsauslassvorrichtung angeordnet ist. In der Flüssigkeitsauslassvorrichtung angeordnet bedeutet, dass die Flüssigkeitsaufbereitungsvorrichtung im Inneren des Wasserhahns, des Duschkopfs und so weiter angeordnet ist und - für den Nutzer unsichtbar - die Flüssigkeit vor Austritt aus der Flüssigkeitsauslassvorrichtung aufbereitet. An der Flüssigkeitsauslassvorrichtung angeordnet bedeutet, dass die Flüssigkeitsaufbereitungsvorrichtung beispielsweise unmittelbar an die Flüssigkeitsauslassvorrichtung sich anschließt und - für den Nutzer sichtbar - die Flüssigkeit vor Austritt in die Nutzumgebung aufbereitet.

Beschrieben wird hier auch ein Verfahren zum Aufbereiten, insbesondere Entkeimen einer Flüssigkeit mittels einer Flüssigkeitsaufbereitungsvorrichtung umfasst ein Zuführen von aus einer Flüssigkeitsversorgungsleitung fließender, aufzubereitender Flüssigkeit über einen Einlass, ein Abführen von aufbereiteter Flüssigkeit über einen Auslass in eine Nutzumgebung, sowie ein Durchströmen einer den Einlass mit dem Auslass flüssigkeitsleitend verbindenden Aufbereitungsstrecke mit Flüssigkeit. In und/oder an der Aufbereitungsstrecke wird mittels unter elektrische Spannung gesetzter Elektroden mindestens ein elektrisches Feld erzeugt und die Flüssigkeit dadurch aufbereitet, insbesondere entkeimt, dass sie in der Aufbereitungsstrecke von diesem mindestens einen elektrischen Feld im Wesentlichen, insbesondere vollständig, durchsetzt wird. Im Wesentlichen, insbesondere vollständig, von dem elektrischen Feld durchsetzt zu sein bedeutet, dass mindestens 80 %, bevorzugt mindestens 95 %, besonders bevorzugt mindestens 99 % der aufzubereitenden Flüssigkeit oder die gesamte Flüssigkeit durch einen Strömungsraum fließt, der dadurch definiert ist, dass er geometrisch von den geraden Verbindungslinien und/oder ebenen Verbindungsflächen, die sich zwischen je zwei Punkten und/oder zwei Kanten der beiden Elektroden aufspannen, eingehüllt und/oder durchdrungen ist. Das elektrische Feld wirkt auf die Bestandteile der aufzubereitenden Flüssigkeit, insbesondere auf biologische Verunreinigungen wie zum Beispiel Krankheitserreger, Mikroorganismen, Bakterien.

Das elektrische Feld wird nur bei Durchströmung der Flüssigkeitsaufbereitungsvorrichtung mittels einer in der Aufbereitungsstrecke angeordneten, von der aufzubereitenden Flüssigkeit oder der aufbereiteten Flüssigkeit durchströmbaren Turbine mit Generator erzeugt.

Eine vorteilhafte Ausgestaltung des Verfahrens ist dadurch gekennzeichnet, dass die Flüssigkeit die Aufbereitungsstrecke durchströmt und dabei von mindestens zwei in Hauptströmungsrichtung der Flüssigkeit seriell aufeinanderfolgenden, voneinander beabstandeten, stationären elektrischen Feldern durchsetzt wird. Ein stationäres elektrisches Feld ist ein Feld, dessen Polarität und Stärke im Wesentlichen oder vollständig unveränderlich ist. Unveränderlich bedeutet, dass eine Feldstärke des elektrischen Feldes während eines Verfahrensablaufs in räumlicher, zeitlicher und elektrischer Hinsicht weniger als 10 %, bevorzugt weniger als 5 % von ihrem Nennwert abweicht. Es zu erzeugen ist besonders einfach. Die Flüssigkeit erfährt beim Hindurchbewegen durch das stationäre Feld zwei Feldpulse, da sie zeitlich aufeinanderfolgend in ein erstes elektrisches Feld eintritt, es durchströmt, dabei einen Feldpuls erfährt, und aus ihm heraustritt, sodann den Abstand zwischen dem ersten und einem zweiten elektrischen Feld durchströmt, und dann in das zweite elektrische Feld eintritt, es durchströmt, dabei einen Feldpuls erfährt, und aus ihm heraustritt. Ein Puls oder Impuls ist ein zeitlich befristet, insbesondere ein kurzzeitig einwirkender Parameter, dementsprechend ist ein Feldpuls ein zeitlich befristet, insbesondere ein kurzzeitig einwirkendes elektrisches Feld. Der Feldpuls ergibt sich aus dem Umstand, dass das stationäre elektrische Feld nur kurzzeitig auf ein jedes vorbeiströmende Teilvolumenelement der Flüssigkeit einwirkt. Unter Teilvolumenelement wird hier eine beliebige, in der Flüssigkeitsgesamtheit mitbewegte, isoliert betrachtete, beliebig kleine Flüssigkeitsmenge verstanden, aus der sich die Flüssigkeitsgesamtheit zusammensetzt und das wie jedes andere die Aufbereitungsstrecke durchströmende Teilvolumenelement von dem elektrischen Feld durchsetzt wird.

Eine weitere vorteilhafte Ausgestaltung des Verfahrens ist dadurch gekennzeichnet, dass die Flüssigkeit die Aufbereitungsstrecke durchströmt und dabei von mindestens einem gepulsten elektrischen Feld durchsetzt wird. Ein gepulstes elektrisches Feld ist ein in zeitlicher und/oder elektrischer Hinsicht instationäres Feld, wobei die Feldstärke zum Beispiel in zeitlich regelmäßig oder unregelmäßig wiederkehrender Abfolge mindestens zwischen einem ersten Wert und einem zweiten Wert nach Art einer einstufigen Treppenfunktion oder nach Art einer Impulsfolge umschaltet. Oder wobei die Feldstärke zwischen einem ersten Wert, einem zweiten Wert und einem Nullwert nach Art einer zweistufigen Treppenfunktion umschaltet. Oder wobei die Feldstärke in zeitlich regelmäßig oder unregelmäßig wiederkehrender Abfolge moduliert, zum Beispiel wiederkehrend ansteigt und abfällt, zum Beispiel nach Art einer mehrstufigen Treppenfunktion, oder nach Art einer Rampenfunktion, oder nach Art einer trigonometrischen Funktion, zum Beispiel einer Sinusfunktion. Ein gepulstes elektrisches Feld kann auch ein getaktetes elektrisches Feld genannt werden.

Es ist besonders vorteilhaft, wenn bei dem gepulsten elektrischen Feld eine Pulsanzahl aus einem Bereich zwischen 1 und 100 Feldpulsen auf ein jedes durch das mindestens eine Feld hindurchströmende Teilvolumenelement der Flüssigkeit einwirkt. Eine Taktung des elektrischen Feldes ist also so ausgelegt, dass bei gegebener Strömungsgeschwindigkeit der Flüssigkeit und gewählter räumlicher Ausdehnung des elektrischen Feldes in Hauptströmungsrichtung zwischen Eintritt in das Feld und Austritt aus dem Feld 1 bis 100 Feldpulse auf dieses Teilvolumenelement einwirken. Mit der Pulszahl steigt eine Qualität der Aufbereitung der Flüssigkeit.

Eine weitere vorteilhafte Ausgestaltung des Verfahrens ist dadurch gekennzeichnet, dass eine zeitliche Dauer eines Feldpulses des gepulsten elektrischen Felds im Bereich 0,01 bis 100 Millisekunden, insbesondere im Bereich 0,1 bis 10 Millisekunden liegt. Die Dauer eines Feldpulses bemisst sich zwischen einem beginnenden Anstieg der Feldstärke von einem Ausgangswert (beispielsweise Feldstärke null) auf einen Zielwert bis zum abgeschlossenen Abfallen der Feldstärke vom Zielwert wieder auf den Ausgangswert. Die Feldpulse können unmittelbar aufeinander folgen oder von Pausen getrennt sein, in den Pausen beträgt eine Feldstärke beispielsweise den Ausgangswert.

Eine weitere vorteilhafte Ausgestaltung des Verfahrens ist dadurch gekennzeichnet, dass eine auf die Flüssigkeit einwirkende Feldstärke des elektrischen Felds im Bereich 0,1 bis 10 Kilovolt pro Millimeter, insbesondere im Bereich 2 bis 6 Kilovolt pro Millimeter liegt. In diesem Bereich kann ein Spannungsdurchschlag der elektrischen Spannung von Elektrode zu Gegenelektrode noch wirkungsvoll vermieden werden, während die für eine erfolgreiche Elektroporation und Flüssigkeitsaufbereitung nötige Feldstärke bereits gegeben ist.

Eine weitere vorteilhafte Ausgestaltung des Verfahrens ist dadurch gekennzeichnet, dass das elektrische Feld eine gleichbleibende Polarität, insbesondere eine intermittierend gleichbleibende Polarität, aufweist. Damit weist das elektrische Feld durchgängig die gleiche Feldrichtung auf und weisen die Elektrode und die Gegenelektrode die jeweils gleiche Polung auf, also beispielsweise Elektrode gleichbleibend am Pluspol, Gegenelektrode gleichbleibend am Minuspol, gegebenenfalls unterbrochen von einem Feldstärkeabfall oder einer Feldunterbrechung auf einen Ausgangswert (beispielsweise Feldstärke null).

Eine weitere vorteilhafte Ausgestaltung des Verfahrens ist dadurch gekennzeichnet, dass die Polaritäten von in Hauptströmungsrichtung der Flüssigkeit seriell aufeinanderfolgender (räumlich hintereinander liegender) elektrischer Felder zueinander invertiert bzw. vertauscht sind. Damit ist die Feldrichtung aufeinanderfolgender elektrischer Felder voneinander verschieden. Dies kann sich positiv auf die Durchschlagsfestigkeit des elektrischen Feldes auswirken.

Eine weitere vorteilhafte Ausgestaltung des Verfahrens ist dadurch gekennzeichnet, dass das elektrische Feld eine alternierende Polarität aufweist. Damit wechselt die Polarität von Elektrode und Gegenelektrode in zeitlich regelmäßiger oder unregelmäßiger Abfolge und ändert sich die Feldrichtung des elektrischen Feldes. Dies kann sich positiv auf die Durchschlagsfestigkeit auswirken.

Eine weitere vorteilhafte Ausgestaltung des Verfahrens ist dadurch gekennzeichnet, dass das elektrische Feld im Wesentlichen, insbesondere vollständig, nur bei Durchströmung der Flüssigkeitsaufbereitungsvorrichtung erzeugt wird. Das bedeutet, dass das elektrische Feld nur dann erzeugt wird und eine Aufbereitung nur dann erfolgt, wenn Flüssigkeit in eine Nutzungsumgebung austritt. Die ruhende Flüssigkeit wird keinem elektrischen Feld ausgesetzt und wird somit nicht aufbereitet. Das dient beispielsweise einer Einsparung von Energie in Stillstandszeiten. Vollständig bedeutet in diesem Zusammenhang, dass der Beginn und das Ende der Flüssigkeitsdurchströmung durch die Aufbereitungsstrecke zeitlich exakt mit dem Beginn und dem Ende des Erzeugens und Anlegens des elektrischen Feldes zusammenfällt. Im Wesentlichen bedeutet in diesem Zusammenhang, dass der Beginn und das Ende der Flüssigkeitsdurchströmung zeitlich weitgehend mit dem Beginn und dem Ende des Erzeugens und Anlegens des elektrischen Feldes zusammenfällt, mit Abweichungen von maximal 10 Sekunden, bevorzugt maximal 5 Sekunden, besonders bevorzugt maximal 1 Sekunde. Abweichung bedeutet in diesem Zusammenhang eine Durchströmung ohne dass ein Feld anliegt.

Eine weitere vorteilhafte Ausgestaltung des Verfahrens ist dadurch gekennzeichnet, dass mindestens ein Parameter des elektrischen Feldes in Abhängigkeit einer Strömungsgeschwindigkeit der Flüssigkeit verändert wird. Beispielsweise wird mindestens einer der Parameter Pulsanzahl, Dauer eines Feldpulses, Feldstärke, Elektrodenpolarität in Abhängigkeit der Strömungsgeschwindigkeit verändert. Strömungsgeschwindigkeit bedeutet hier die mittlere Strömungsgeschwindigkeit der durch die Aufbereitungsstrecke fließenden Flüssigkeit. Eine langsamer fließende Flüssigkeit kann beispielsweise mit einer geringeren Pulstaktung, mit kürzeren Feldpulsen, mit einer geringeren Feldstärke aufbereitet werden als eine schneller fließende Flüssigkeit. Damit ist eine Anpassung des Verfahrens an die Strömungsgeschwindigkeit und an den Flüssigkeitsdurchsatz gegeben und eine Möglichkeit geschaffen, die bei jeder Strömungsgeschwindigkeit eine gleichbleibend hohe Qualität der Aufbereitung erreicht.

Mit der Flüssigkeitsaufbereitungsvorrichtung, mit der Flüssigkeitsauslassvorrichtung und mit dem Verfahren sind Lösungen geschaffen, mit denen es nun möglich ist, frisch aufbereitete, insbesondere entkeimte Flüssigkeit, insbesondere Trinkwasser, im Durchlaufverfahren am Ort und im Zeitpunkt der Nutzung bereitzustellen, mit der Gewissheit, dass die Flüssigkeit auch nach einer Zapfpause sofort wieder frisch aufbereitet zur Verfügung steht.

Die Zeichnung offenbart verschiedene Flüssigkeitsvorrichtungen und zeigt in
- Figur 1: eine Flüssigkeitsauslassvorrichtung mit einer ersten Flüssigkeitsaufbereitungsvorrichtung im Längsschnitt,
- Figur 2: eine zweite Flüssigkeitsaufbereitungsvorrichtung im Längs- und Querschnitt,
- Figur 3: eine dritte Flüssigkeitsaufbereitungsvorrichtung im Längs- und Querschnitt,
- Figur 4: eine vierte Flüssigkeitsaufbereitungsvorrichtung im Längs- und Querschnitt,
- Figur 5: eine fünfte Flüssigkeitsaufbereitungsvorrichtung im Längsschnitt.

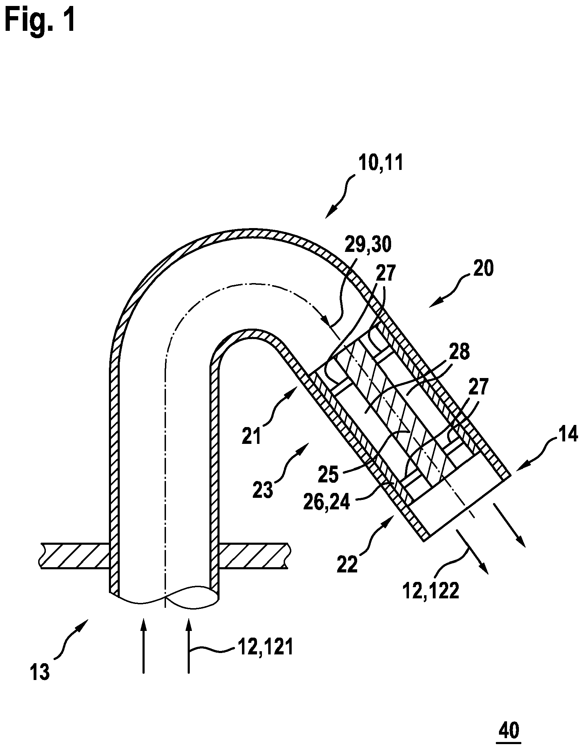

Figur 1 offenbart eine Flüssigkeitsauslassvorrichtung 10 mit einer ersten Flüssigkeitsaufbereitungsvorrichtung 20 im Längsschnitt. Die Flüssigkeitsauslassvorrichtung 10 wird vorliegend gebildet von einer Waschtischarmatur 11 in Form eines gebogenen Rohres zum Zapfen einer Flüssigkeit 12, beispielsweise Trinkwasser. Eine Ventilvorrichtung zum Freigeben und Verschließen einer Durchströmung mit Flüssigkeit 12 ist nicht dargestellt. Bei Freigabe der Flüssigkeitsdurchströmung tritt aufzubereitende Flüssigkeit 121 aus einer Flüssigkeitsversorgungsleitung (nicht dargestellt) an einem Eintrittsquerschnitt 13 in die Flüssigkeitsauslassvorrichtung 10 ein und tritt aufbereitete Flüssigkeit 122 an einem Austrittsquerschnitt 14 in eine Nutzumgebung 40 aus. Die Flüssigkeitsaufbereitungsvorrichtung 20 umfasst einen Einlass 21 zum Zuführen von aufzubereitender Flüssigkeit 121, wie sie aus der Flüssigkeitsversorgungsleitung kommt, sowie einen Auslass 22 zum Abführen von aufbereiteter Flüssigkeit 122 in die Nutzumgebung 40. Zwischen Einlass 21 und Auslass 22 ist eine Aufbereitungsstrecke 23 mit einem eine erste Elektrode 24 und eine zweite Elektrode (Gegenelektrode) 25 umfassenden Elektrodenpaar angeordnet. Die erste Elektrode 24 bildet vorliegend die Wand 26 der Flüssigkeitsaufbereitungsvorrichtung 20, sie verläuft umfänglich entlang einer Innenwand der Flüssigkeitsauslassvorrichtung 10. Die zweite Elektrode 25 ist innerhalb, beispielsweise mittig und/oder koaxial innerhalb der Aufbereitungsstrecke 23 angeordnet, koaxial bedeutet, dass die Längsachse (Zylinderachse) 29 der zweiten Elektrode 25 mit der Hauptströmungsrichtung 30 der Flüssigkeit 12 in der Aufbereitungstrecke 23 identisch ist. Im Zwischenraum zwischen der ersten Elektrode 24 und der zweiten Elektrode 25 sind stegförmige Verbindungselemente 27 angeordnet, die die Elektroden 24, 25 mechanisch, jedoch elektrisch isolierend, verbinden. Bei Anlegen einer elektrischen Spannung an die Elektroden 24, 25 bildet sich in der Aufbereitungsstrecke 23 zwischen den Elektroden 24, 25 ein elektrisches Feld 28 aus. Dieses elektrische Feld 28 durchsetzt die Flüssigkeit 12, 121 und bereitet diese mittels irreversibler Elektroporation auf.

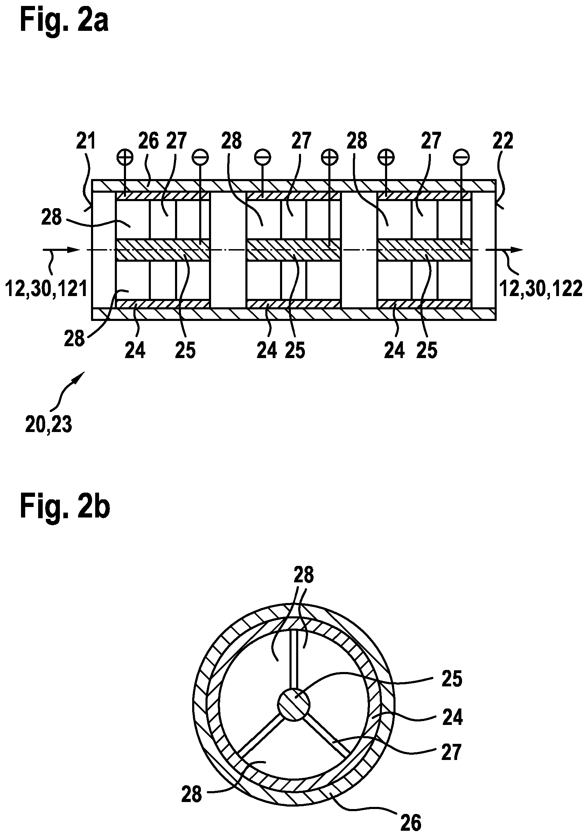

Figur 2 offenbart eine zweite Flüssigkeitsaufbereitungsvorrichtung 20 im Längsschnitt (Figur 2a) und Querschnitt (Figur 2b). Diese Flüssigkeitsaufbereitungsvorrichtung 20 umfasst einen Einlass 21, einen Auslass 22, eine Aufbereitungsstrecke 23, eine Wand 26 sowie drei Elektrodenpaare mit jeweils einer ersten Elektrode 24 und einer zweiten Elektrode 25. Die ersten Elektroden 24 sind vollständig umfänglich an der Wand 26 angeordnet. Die zweiten Elektroden 25 sind koaxial innerhalb der Aufbereitungsstrecke 23 angeordnet. Die Elektroden 24, 25 können oberflächlich zumindest teilweise isolierend beschichtet sein (nicht dargestellt). Flüssigkeit 12 durchströmt die Aufbereitungsstrecke 23 und wird dabei von drei in Hauptströmungsrichtung 30 der Flüssigkeit 12 seriell aufeinanderfolgenden, voneinander beabstandeten, elektrischen Feldern 28 durchsetzt. Hierbei kann es sich um stationäre elektrische Felder 28 handeln, die ihre jeweilige Polarität ununterbrochen beibehalten (gleichbleibende Polarität), deren Polaritäten vom ersten Elektrodenpaar zum zweiten Elektrodenpaar sowie vom zweiten Elektrodenpaar zum dritten Elektrodenpaar jedoch wechseln (zueinander invertiert sind), wie durch die Plus- und Minuszeichen angedeutet. Alternativ kann es sich um intermittierend gleichbleibende Polaritäten handeln, die durch Pausen ohne Anlegen einer elektrischen Spannung (ohne elektrische Verbindung) unterbrochen sind. Die elektrische Verbindung zu den im Innern des Strömungsraums der Aufbereitungsstrecke 23 angeordneten Elektroden 24, 25 bzw. Elektrodenabschnitten kann - elektrisch isoliert - durch die stegförmigen Verbindungselemente 27 hindurch erfolgen.

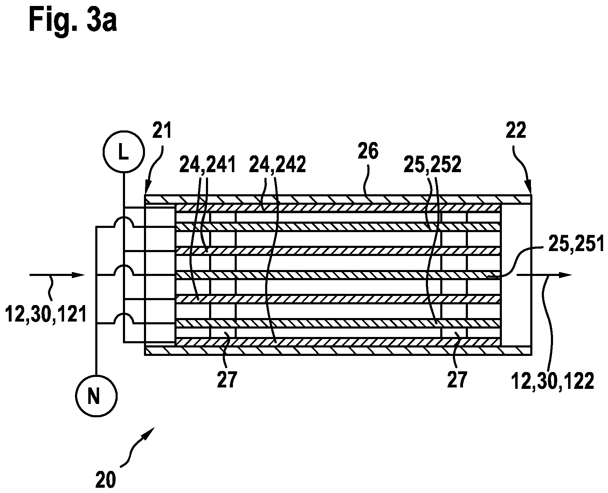

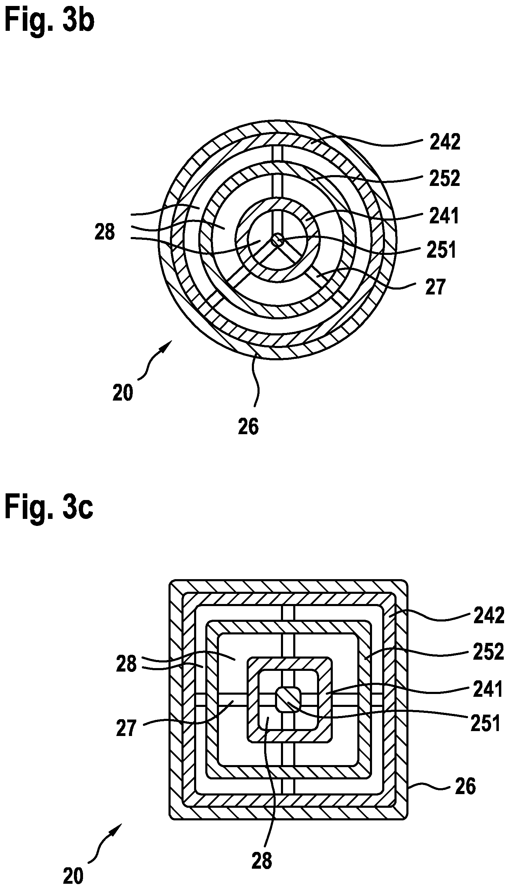

Figur 3 offenbart eine dritte Flüssigkeitsaufbereitungsvorrichtung 20. Figur 3a zeigt den Längsschnitt einer Flüssigkeitsaufbereitungsvorrichtung 20 mit einem zwei Elektroden 24, 25 umfassenden Elektrodenpaar. Die erste Elektrode 24 weist zwei elektrisch verbundene, parallel geschaltete hohlkreiszylindrische Elektrodenabschnitte 241, 242 auf. Die zweite Elektrode 25 weist zwei elektrisch verbundene, parallel geschaltete Elektrodenabschnitte 251, 252 auf. Der Elektrodenabschnitt 251 ist vollkreiszylindrisch ausgebildet, der Elektrodenabschnitt 252 ist hohlkreiszylindrisch ausgebildet. Die Elektrodenabschnitte 241, 242, 251, 252 weisen voneinander abweichende Durchmesser auf und erstrecken sich achsparallel zu einer Hauptströmungsrichtung 30 der Flüssigkeit 12. Die Elektrodenabschnitte 241, 242, 251, 252 sind koaxial und radial beabstandet zueinander angeordnet. Die Elektrodenabschnitte 241, 242 der ersten Elektrode 24 bilden Zwischenräume, in die die Elektrodenabschnitte 251, 252 der zweiten Elektrode 25 eingreifen. Benachbarte Elektrodenabschnitte weisen voneinander abweichende Polaritäten auf. Die Polaritäten sind hier von alternierender Art. Die Elektrodenabschnitte 241, 242 der ersten Elektrode 24 können mit einem elektrischen Leiter L verbunden sein. An dem elektrischen Leiter L liegen beispielsweise zeitlich aufeinander folgende rechteckförmige Spannungspulse mit alternierenden Vorzeichen an. Alternativ können beispielsweise Spannungsfunktionen anderer Art mit alternierenden Vorzeichen anliegen. Die Elektrodenabschnitte 251, 252 der zweiten Elektrode 25 können mit einem elektrischen Nullleiter N verbunden sein. Zwischen den Elektrodenabschnitten bilden sich elektrische Felder 28 aus.

Bei Anliegen von Spannungspulsen stellen sich gepulste elektrische Felder 28 ein.

Figur 3b zeigt den Querschnitt der unter Figur 3a erläuterten Flüssigkeitsaufbereitungsvorrichtung 20 mit vollkreiszylindrischen bzw. hohlkreiszylindrischen Elektrodenabschnitten 241, 242, 251, 252.

Figur 3c zeigt einen alternativen Querschnitt der unter Figur 3a erläuterten Flüssigkeitsaufbereitungsvorrichtung 20, wobei die Elektrodenabschnitte 241, 242, 251, 252 hier prismatisch bzw. hohlprismatisch, im Querschnitt quadratisch bzw. hohlquadratisch ausgebildet sind.

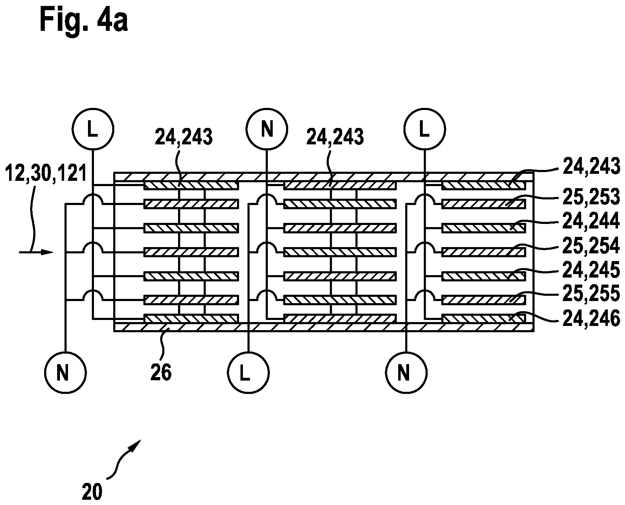

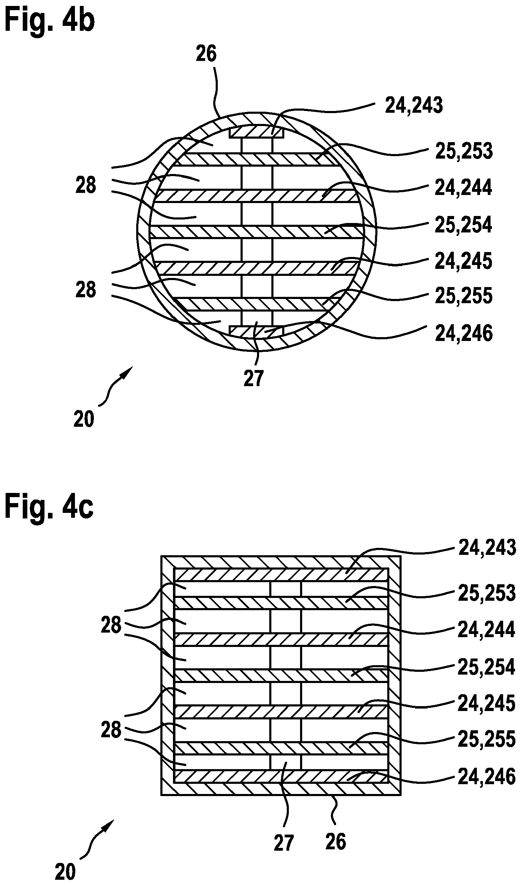

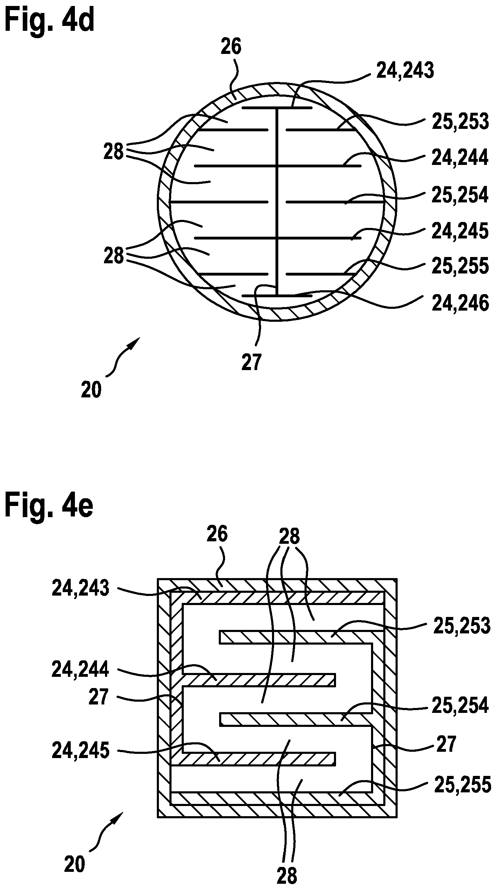

Figur 4 offenbart eine vierte Flüssigkeitsaufbereitungsvorrichtung 20. Figur 4a zeigt den Längsschnitt einer Flüssigkeitsaufbereitungsvorrichtung 20 mit drei jeweils zwei Elektroden 24, 25 umfassenden Elektrodenpaaren. Die erste Elektrode 24 weist vier elektrisch verbundene, parallel geschaltete, plattenförmig ausgebildete Elektrodenabschnitte 243, 244, 245, 246 auf. Die zweite Elektrode 25 weist drei elektrisch verbundene, parallel geschaltete, plattenförmig ausgebildete Elektrodenabschnitte 253, 254, 255 auf. Platten stellen eine geometrische Sonderform von Schalen dar, ihr Krümmungsradius geht gegen unendlich. Die Elektrodenabschnitte 243, 244, 245, 246, 253, 254, 255 erstrecken sich mit ihrer Längsachse achsparallel zu einer Hauptströmungsrichtung 30 der Flüssigkeit 12. Die Elektrodenabschnitte 243, 244, 245, 246, 253, 254, 255 sind beabstandet zueinander gestapelt angeordnet. Die Elektrodenabschnitte 243, 244, 245, 246 der ersten Elektrode 24 bilden Zwischenräume, in die die Elektrodenabschnitte 253, 254, 255 der zweiten Elektrode 25 eingreifen. Die an die Elektrodenabschnitte 243, 244, 245, 246, 253, 254, 255 angelegten Polaritäten sind mittels der Hinweise auf Leiter L und Nullleiter N angegeben.

Die Figuren 4b und 4d zeigen mögliche Querschnitte der unter Figur 4a erläuterten Flüssigkeitsaufbereitungsvorrichtung 20 mit runder Kontur.

Die Figuren 4c und 4e zeigen alternative Querschnitte der unter Figur 4a erläuterten Flüssigkeitsaufbereitungsvorrichtung 20 mit eckiger Kontur.

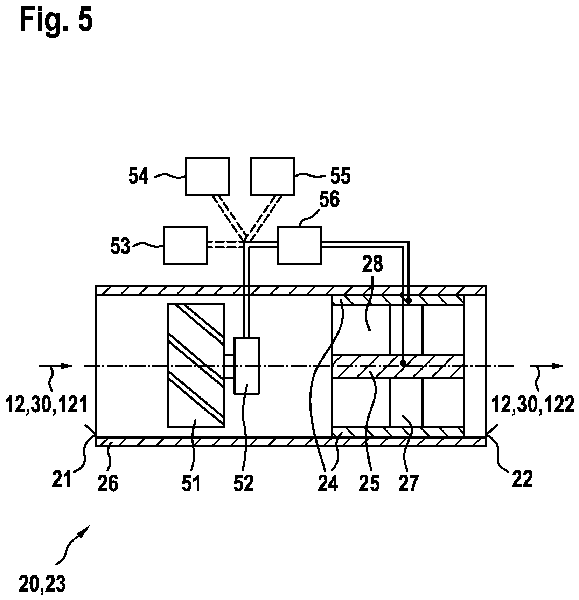

Figur 5 offenbart eine fünfte Flüssigkeitsaufbereitungsvorrichtung 20 mit einem Einlass 21, einem Auslass 22, einer Aufbereitungsstrecke 23, einer Wand 26 sowie einem Elektrodenpaar mit einer ersten Elektrode 24 und einer zweiten Elektrode 25. Die erste Elektrode 24 ist umfänglich an der Wand 26 angeordnet. Die zweite Elektrode 25 ist innerhalb der Aufbereitungsstrecke 23 angeordnet. Ferner umfasst die Flüssigkeitsaufbereitungsvorrichtung 20 eine Energiebereitstellungseinheit 50 zum Bereitstellen und/oder Erzeugen von elektrischer Energie, mittels der eine Spannung zum Anlegen an die Elektroden bzw. Elektrodenabschnitte bereitgestellt werden kann. In Figur 5 ist eine Energiebereitstellungseinheit 50 in Form einer flüssigkeitsdurchströmbaren Turbine 51 mit Generator 52 dargestellt. Die aufzubereitende Flüssigkeit 121 strömt durch die Aufbereitungsstrecke 23 und treibt dabei die Turbine 51 zu Drehungen an. Die Turbine 51 treibt ihrerseits den Generator 52 zu Drehungen an, sei es mittels einer direkten mechanischen Kopplung oder mittels einer mechanischen Übersetzung/Getriebe. Der Generator 52 erzeugt dabei elektrische Energie. Mit einer solchen Energiebereitstellungseinheit 50 ist eine leicht umsetzbare Umsetzung geschaffen, dass das elektrische Feld 28 nur bei Durchströmung der Flüssigkeitsaufbereitungsvorrichtung 20 erzeugt wird. Weitere Ausführungsmöglichkeiten einer Energiebereitstellungseinheit 50 sind ein Netzanschluss 53 an ein Energieversorgungsnetz (nicht dargestellt), ein Photovoltaikmodul 54 oder eine Batterie 55 (hier mit gestrichelten Anschlusslinien). Die elektrische Energie wird einem Spannungspulsgenerator 56 zugeführt, der die Elektroden 24, 25 mit Spannung, insbesondere mit Spannungspulsen versorgt.

## Patentansprüche

1. Flüssigkeitsaufbereitungsvorrichtung (20) zum Aufbereiten, insbesondere Entkeimen, einer an einer Flüssigkeitsauslassvorrichtung (10) aus einer Flüssigkeitsversorgungsleitung in eine Nutzumgebung (40) fließenden Flüssigkeit (12), insbesondere von Trinkwasser, umfassend
• einen Einlass (21) zum Zuführen von aufzubereitender Flüssigkeit (121),
• einen Auslass (22) zum Abführen von aufbereiteter Flüssigkeit (122), sowie
• eine den Einlass (21) mit dem Auslass (22) flüssigkeitsleitend verbindende Aufbereitungsstrecke (23),
wobei
• in und/oder an der Aufbereitungsstrecke (23) mindestens ein Elektrodenpaar angeordnet ist,
• das dazu vorgesehen ist, mindestens ein elektrisches Feld (28) zu erzeugen, von dem die Flüssigkeit (12) in der Aufbereitungsstrecke (23) durchsetzt ist und mittels irreversibler Elektroporation aufbereitet, insbesondere entkeimt wird,
• die Flüssigkeitsaufbereitungsvorrichtung (20) eine Energiebereitstellungseinheit (50) umfasst, die dazu vorgesehen ist, eine elektrische Energie zum Erzeugen einer an die Elektroden (24, 25) anlegbaren Spannung bereitzustellen,
und wobei
• die Energiebereitstellungseinheit (50) eine in der Aufbereitungsstrecke (23) angeordnete, von der aufzubereitenden Flüssigkeit (121) oder der aufbereiteten Flüssigkeit (122) durchströmbare Turbine (51) mit Generator (52) umfasst,
**dadurch gekennzeichnet, dass**
• das Elektrodenpaar zwei Elektroden (24, 25) umfasst,
• wobei mindestens eine Elektroden (24, 25) mindestens zwei elektrisch parallel geschaltete Elektrodenabschnitte (241, 242, usw., 251, 252, usw.) aufweist,
• wobei die Elektrodenabschnitte (241, 242, usw., 251, 252, usw.) vollzylindrisch und/oder hohlzylindrisch mit einer Zylinderachse (29) und mit voneinander abweichenden Durchmessern ausgebildet sind und sich achsparallel zu einer Hauptströmungsrichtung (30) der Flüssigkeit (12) erstrecken,
• wobei die Elektrodenabschnitte (241, 242, usw., 251, 252, usw.) im Wesentlichen, insbesondere vollständig koaxial und radial beabstandet zueinander angeordnet sind,
• wobei die Elektrodenabschnitte (241, 242, usw.) einer Elektrode (24) Zwischenräume bilden, in die die Elektrodenabschnitte (251, 252, usw.) der anderen Elektrode (25) zumindest teilweise eingreifen,
• wobei benachbarte Elektrodenabschnitte (241, 242, usw., 251, 252, usw.) voneinander abweichende Polaritäten aufweisen.

2. Flüssigkeitsaufbereitungsvorrichtung (20) nach Anspruch 1,
**dadurch gekennzeichnet, dass**
• das Elektrodenpaar zwei Elektroden (24, 25) umfasst,
• wobei eine erste Elektrode (24) im Wesentlichen, insbesondere vollständig an einer Wand (26) der Flüssigkeitsaufbereitungsvorrichtung (20) angeordnet ist, und
• wobei eine zweite Elektrode (25) innerhalb der Aufbereitungsstrecke (23) angeordnet ist.

3. Flüssigkeitsaufbereitungsvorrichtung (20) nach einem der vorstehenden Ansprüche,
**dadurch gekennzeichnet, dass** die Elektroden (24, 25) und/oder Elektrodenabschnitte zumindest teilweise isolierend beschichtet sind.

4. Flüssigkeitsaufbereitungsvorrichtung (20) nach einem der vorstehenden Ansprüche,
**dadurch gekennzeichnet, dass** der der Flüssigkeit (12) zur Verfügung stehende freie Abstand zwischen den Elektroden (24, 25) und/oder zwischen den Elektrodenabschnitten im Bereich 0,1 bis 20 Millimeter, bevorzugt im Bereich 1 bis 10 Millimeter liegt.

5. Flüssigkeitsaufbereitungsvorrichtung (20) nach einem der vorstehenden Ansprüche,
**gekennzeichnet durch** einen Spannungspulsgenerator (56), der dazu vorgesehen ist, Spannungspulse zum Anlegen an die Elektroden (24, 25) zu erzeugen.

6. Flüssigkeitsauslassvorrichtung (10) wie ein Wasserhahn, eine Waschtischarmatur, ein Duschkopf oder eine Einspeisevorrichtung zum Zapfen und/oder Dosieren einer Flüssigkeit (12) aus einer Flüssigkeitsversorgungsleitung in eine Nutzumgebung (40) für Anwendungen in Küche, Badezimmer und/oder Waschküche, mit einer Flüssigkeitsaufbereitungsvorrichtung (20) nach einem der Ansprüche 1 bis 5, wobei die Flüssigkeitsaufbereitungsvorrichtung (20) in oder an der Flüssigkeitsauslassvorrichtung (10) angeordnet ist.

## Claims

1. Liquid treatment device (20) for treating, in particular sterilizing, a liquid (12) flowing from a liquid supply line into a use environment (40) on a liquid outlet device (10), in particular drinking water, comprising
• an inlet (21) for supplying liquid (121) to be treated,
• an outlet (22) for discharging treated liquid (122), and
• a treatment zone (23) connecting the inlet (21) to the outlet (22) in a liquid-conducting manner,
wherein
• at least one pair of electrodes is arranged in and/or on the treatment zone (23),
• which pair of electrodes is intended to generate at least one electric field (28) which passes through the liquid (12) in the treatment zone (23) and by which the liquid is treated, in particular sterilized, by means of irreversible electroporation,
• the liquid treatment device (20) comprises an energy provision unit (50) which is intended to provide electrical energy for generating a voltage which can be applied to the electrodes (24, 25),
and wherein
• the energy provision unit (50) comprises a turbine (51) which is arranged in the treatment zone (23), through which the liquid (121) to be treated or the treated liquid (122) can flow and which has a generator (52),
**characterized in that**
• the pair of electrodes comprises two electrodes (24, 25),
• wherein at least one electrode (24, 25) has at least two electrode sections (241, 242, etc., 251, 252, etc.) connected electrically in parallel,
• wherein the electrode sections (241, 242, etc., 251, 252, etc.) are formed in a solid-cylindrical and/or hollow-cylindrical manner with a cylinder axis (29) and with diameters which differ from each other and extend axially parallel to a main flow direction (30) of the liquid (12),
• wherein the electrode sections (241, 242, etc., 251, 252, etc.) are arranged substantially, in particular entirely, coaxially and radially at a distance from each other,
• wherein the electrode sections (241, 242, etc.) of one electrode (24) form interspaces into which the electrode sections (251, 252, etc.) of the other electrode (25) at least partially engage,
• wherein adjacent electrode sections (241, 242, etc., 251, 252 etc.) have polarities which differ from each other.

2. Liquid treatment device (20) according to Claim 1, **characterized in that**
• the pair of electrodes comprises two electrodes (24, 25),
• wherein a first electrode (24) is arranged substantially, in particular entirely, on a wall (26) of the liquid treatment device (20), and
• wherein a second electrode (25) is arranged within the treatment zone (23).

3. Liquid treatment device (20) according to one of the preceding claims,
**characterized in that** the electrodes (24, 25) and/or electrode sections are at least partially coated in an insulating manner.

4. Liquid treatment device (20) according to one of the preceding claims,
**characterized in that** the free space between the electrodes (24, 25) and/or between the electrode sections that is available to the liquid (12) lies in the range of from 0.1 to 20 millimetres, preferably in the range of from 1 to 10 millimetres.

5. Liquid treatment device (20) according to one of the preceding claims,
**characterized by** a voltage pulse generator (56) which is intended to generate voltage pulses to be applied to the electrodes (24, 25).

6. Liquid outlet device (10) such as a water tap, a washstand fitting, a shower head or a feed device for drawing and/or metering a liquid (12) from a liquid supply line into a use environment (40) for kitchen, bathroom and/or laundry applications, comprising a liquid treatment device (20) according to one of Claims 1 to 5, wherein the liquid treatment device (20) is arranged in or on the liquid outlet device (10).

## Revendications

1. Dispositif de traitement de liquide (20) permettant de traiter, en particulier stériliser, un liquide (12), en particulier de l'eau potable, s'écoulant au niveau d'un dispositif de sortie de liquide (10) à partir d'une conduite d'alimentation en eau dans un environnement utile (40), comprenant
• une entrée (21) pour amener un liquide à traiter (121),
• une sortie (22) pour évacuer un liquide traité (122), et
• une voie de traitement (23) reliant l'entrée (21) à la sortie (22) en conduisant le liquide,
dans lequel
• au moins une paire d'électrodes est disposée dans et/ou sur la voie de traitement (23),
• qui est prévue pour générer au moins un champ électrique (28) que traverse le liquide (12) sur la voie de traitement (23) et qui traite celui-ci, en particulier le stérilise, au moyen d'une électroporation irréversible,
• le dispositif de traitement de liquide (20) comprend une unité de fourniture d'énergie (50) qui est prévue pour fournir de l'énergie électrique afin de générer une tension pouvant être appliquée aux électrodes (24, 25), et dans lequel
• l'unité de fourniture d'énergie (50) comprend une turbine (51) avec un générateur (52), disposée sur la voie de traitement (23) et par laquelle le liquide à traiter (121) ou le liquide traité (122) peut s'écouler, **caractérisé en ce que**
• la paire d'électrodes comprend deux électrodes (24, 25),
• dans lequel au moins une électrode (24, 25) présente au moins deux parties d'électrode (241, 242, etc., 251, 252, etc.) connectées électriquement en parallèle,
• dans lequel les parties d'électrode (241, 242, etc., 251, 252, etc.) sont réalisées à la manière d'un cylindre plein et/ou d'un cylindre creux avec un axe de cylindre (29) et avec des diamètres différents les uns des autres, et s'étendent en parallèle à l'axe par rapport à une direction d'écoulement principale (30) du liquide (12),
• dans lequel les parties d'électrode (241, 242, etc., 251, 252, etc.) sont disposées les unes par rapport aux autres de manière substantiellement, en particulier complètement, coaxialement et radialement espacée,
• dans lequel les parties d'électrode (241, 242, etc.) d'une électrode (24) formes des espaces dans lesquels les parties d'électrode (251, 252, etc.) de l'autre électrode (25) viennent en prise au moins partiellement,
• dans lequel des parties d'électrode (241, 242, etc., 251, 252, etc.) voisines présentent des polarités différentes les unes des autres.

2. Dispositif de traitement de liquide (20) selon la revendication 1,
**caractérisé en ce que**
• la paire d'électrodes comprend deux électrodes (24, 25),
• dans lequel une première électrode (24) est disposée substantiellement, en particulier entièrement, sur une paroi (26) du dispositif de traitement de liquide (20), et
• dans lequel une deuxième électrode (25) est disposée à l'intérieur de la voie de traitement (23).

3. Dispositif de traitement de liquide (20) selon l'une quelconque des revendications précédentes,
**caractérisé en ce que** les électrodes (24, 25) et/ou les parties d'électrode sont au moins partiellement recouvertes d'un isolant.

4. Dispositif de traitement de liquide (20) selon l'une quelconque des revendications précédentes,
**caractérisé en ce que** la distance libre entre les électrodes (24, 25) et/ou entre les parties d'électrode, disponible pour le liquide (12), est comprise dans la plage de 0,1 à 20 millimètres, de préférence dans la plage de 1 à 10 millimètres.

5. Dispositif de traitement de liquide (20) selon l'une quelconque des revendications précédentes,
**caractérisé par** un générateur d'impulsion de tension (56) qui est prévu pour générer des impulsions de tension à appliquer aux électrodes (24, 25).

6. Dispositif de sortie de liquide (10), tel qu'un robinet, une robinetterie de lavabo, une pomme de douche ou un dispositif d'injection pour prélever et/ou doser un liquide (12) provenant d'une conduite d'alimentation en liquide dans un environnement utile (40) pour des applications dans la cuisine, la salle de bain et/ou la buanderie, comprenant un dispositif de traitement de liquide (20) selon l'une quelconque des revendications 1 à 5, dans lequel le dispositif de traitement de liquide (20) est disposé dans ou sur le dispositif de sortie de liquide (10).
